Europäisches Patentamt

European Patent Office

Office européen des brevets

(19)

(11) Publication number: **0 019 835 B1**

# EUROPEAN PATENT SPECIFICATION

(12)

(45) Date of publication of patent specification: **22.01.92**  (51) Int. Cl.⁵: **B32B** **15/08**, B32B 33/00

(21) Application number: **80102788.9**

(22) Date of filing: **20.05.80**

Divisional application 84107722 filed on 03.07.84.

The file contains technical information submitted after the application was filed and not included in this specification

(54) **Formable metal-plastic-metal structural laminates and process for preparing such laminates.**

(30) Priority: **21.05.79 US 41441**
**21.05.79 US 41133**

(43) Date of publication of application:
**10.12.80 Bulletin 80/25**

(45) Publication of the grant of the patent:
**22.01.92 Bulletin 92/04**

(84) Designated Contracting States:
**BE DE FR GB IT NL SE**

(56) References cited:
DE-A- 2 709 644        GB-A- 1 014 154
GB-A- 1 092 716        GB-A- 1 221 134
GB-A- 1 231 609        GB-A- 1 237 413
GB-A- 1 385 529        US-A- 3 274 328

(73) Proprietor: **THE DOW CHEMICAL COMPANY**
**2030 Dow Center Abbott Road P.O. Box 1967**
**Midland Michigan 48640-1967(US)**

(72) Inventor: **Newman, Ritchey Owsley**
**36 Rosemary Court**
**Midland Michigan(US)**
Inventor: **Rieke, James Kirk**
**4715 Swede Road**
**Midland Michigan(US)**
Inventor: **Wright, Donald Ray**
**4615 Kingston Court**
**Midland Michigan(US)**
Inventor: **Tong, Wen-Hong**
**4508 Oakridge Drive**
**Midland Michigan(US)**

(74) Representative: **Weickmann, Heinrich,**
**Dipl.-Ing. et al**
**Patentanwälte Dipl.-Ing. H.Weickmann**
**Dipl.-Phys.Dr. K.Fincke Dipl.-Ing.**
**F.A.Weickmann Dipl.-Chem. B. Huber Dr.-Ing.**
**H. Liska Dipl.-Phys.Dr. J. Prechtel Postfach**
**860820**
**W-8000 München 86(DE)**

EP 0 019 835 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to laminates of metal and plastic and to their preparation. More particularly, this invention relates to novel aluminium-polyolefin-aluminium structural laminates which can be formed into various useful articles having compound curves using conventional metal forming techniques.

Metal plastic laminates are well known items of commerce. They include relatively thin laminates useful in flexible packaging end use applications as well as relatively thick laminates used as construction materials. Methods of preparing such laminates are also known. One method includes bringing at least one layer of plastic and at least one layer of metal into intimate contact and subjecting them to suitable heat and pressure, using, for example, a molding press. A more efficient and continuous method involves the well known extrusion processes - extrusion coating or extrusion lamination. Often an intermediate layer of adhesive or primer, in the form of a film or coating, is used in conjunction with these methods to ensure adequate adhesion between the metal substrate and plastic.

Metal plastic laminates have also been the subject of numerous patents. An exemplary selection of such patents includes U.S. Patent Nos. 3,298,559; 3,340,714; 3,348,995; 3,382,136; 3,542,605; 3,594,249; 3,616,019; 3,711,365 and 3,721,597. Most metal plastic laminates known in the art are satisfactory for many commercial uses as stated above. However, such laminates lack, among other things, satisfactory formability.

When an adhesive polymer containing polar functional groups is used as the plastic layer, the desired bond to the metal substrate is realized without use of any intermediate adhesive layer therebetween.

Polyolefins such as polyethylene and polypropylene are generally very difficult to bond to metal because they lack any polar functional groups. Therefore, polyolefins are usually bonded to metal using an intermediate adhesive layer containing polar functional groups, such as, for example, a layer of ethylene and acrylic acid copolymer. In addition to the intermediate adhesive layer, other methods are also employed to enhance the desired adhesion in metal-polyolefin laminates. In one of such methods, the metal surface is treated physically or chemically to provide a roughened surface or to deposit a thin layer of chemical conversion coating thereon. In another method, the surface of polyolefin is treated or modified with solvent, flame, chemical, or electric discharge.

Since the use of an intermediate adhesive layer introduces more complexity into the laminating process, with related process difficulties and the attendant increase in cost, a number of approaches have been proposed to bond polyolefins directly to different metal substrates.

In U.S. Patent 3,455,775, an aluminum-plastic laminate is made by roughening the surfaces of a pair of aluminum sheets, followed by etching the surfaces with a sulfochromate solution, and thereafter autogenously bonding the treated surfaces of the sheets together under heat and pressure by inserting a thermoplastic layer therebetween.

In U.S. Patent 3,348,995, the adhesion to metal of polyethylene, density range of 0.910 to 0.940, is improved by the use of a thin high density polyethylene primer coat, density range of 0.941 to 0.965. More specifically, a layer of polyethylene having density of 0.941 to 0.956 and thickness of up to 127 $\mu$m (5 mils) is applied to a metal heated to a temperature of at least 500˚ F (260.0˚ C). A subsequent application to the heated metal of a lower density polyethylene layer of greater thickness causes adhesion of the polyethylene layers to the metal.

U.S. Patent 3,826,628 discloses a metal-plastic laminate wherein a film of lower polyolefin is adhered directly to a steel substrate having on the surface thereon a chrome/chrome oxide coating. One major disadvantage of such laminate is that the adhesion between the polyolefin film and metal leaves much to be desired. More specifically, the adhesion value of the laminate is below 10 pounds per inch of sample width, as measured by the modified ASTM D-903-49 described hereinbelow, insufficient to prevent delamination when the laminate is subjected to cold-forming by the so-called "draw die" technique.

GB-A-1,014,154 discloses polyethylene-aluminum laminates which are prepared by cold-forming of thermoplastic sheets having a thickness of from 0.013 cm (0.005 inch) to 3.6 cm (1.4 inches). This method comprises laminating to both surfaces of the sheet a metal foil having a thickness of from 0.00064 cm (0.00025 inch) to 0.025 cm (0.01 inch), the thickness of both foils together being less than the thickness of the thermoplastic core, and bending, embossing or drawing the laminated sheet at a substantially ambient temperature. The sheets thereby produced however are laminates which are inelastic and generally have a low stiffness.

Accordingly, it is an object of this invention to provide a metal-polymer-metal structural laminate capable of being formed into an article using, for example, conventional metal-forming equipment.

The laminate of the present invention comprises two aluminium skin layers and a centrally disposed polymer comprising a core layer and first and second adhesive layers. More specifically, the laminate comprises a core of polyolefinic material having tightly adhered to each side thereof an aluminium skin layer wherein the core is tightly adhered to the aluminium skin layers by the use of an intermediate adhesive layer therebetween, each aluminium skin layer is from 152 μm to 305 μm (6 - 12 mil) thick and a total laminate thickness of from 762 μm to 1524 μm (30 - 60 mil); the core of polyolefin material being selected from homopolymers and copolymers of ethylene or propylene and having a brittle temperature of less than about -1.1°C and a Vicat softening point of greater than about 76.7°C; the laminate having (1) a flexural stiffness at least about 40 percent that of the solid metal of the skin layer of the lower modulus having the same thickness as the laminate as measured by ASTM D-790 on a 2.54 cm (one inch) wide sample having 10.16 cm (four inch) span under three point loading conditions, (2) a density from 25 to 90 percent that of the average of two solid metal skin layers, (3) as a measure of stretch formability, a "limiting dome height" of at least about 60 percent of the limiting dome height of the solid metal of the skin layer of the lower ultimate elongation having the same thickness as the laminate, (4) the capability of being subjected to a no load oven test, subsequent to forming of the laminate, at a temperature of at least 87.8°C for a period of 30 minutes without delamination, and (5) the capability of being bent at room temperature to 90° to a critical radius without metal rupture; the critical radius, defined as the distance from the pivot point to the inner skin surface of the laminate, is about equal to the total laminate thickness.

As used herein, the term "limiting dome height" is that height measured when testing sheet metal blank or laminate blanks in accordance with General Motors Corporation test procedures described in "Metal Progess", May 1975, pp. 52-54 and "Metals Engineering Quarterly", August 1975, pp. 53-57, using a blank width to clamp diameter ratio of about 1.0.

As used herein, the term "thightly adhered" means a lap shear value of at least about 34 bar at room temperature as measured by ASTM D 3165-73 using a lap length of about 6,35 mm.

An aluminium skin layer can be formed, for example, from aluminium, aluminium alloys, alloy-clad aluminium. These metals may also be surface treated or have thereon surface conversion coatings.

The aluminium skin layers on each side of the core can be formed of the same material or of different materials and can have the same or different thicknesses.

The polymer core of this invention is formed from a polyolefinic material which, when laminated to the aluminium skin layer by use of an intermediate adhesive layer, can pass a no load oven test without any delamination, after being subjected to a temperature of at least 87.8°C for a period of 30 minutes. The polymer core can have a thickness from 152 μm to 1220 μm, preferably from 254 to 1143 μm, inclusive of any adhesive layer(s) which may be employed. In general, rubber-type polymers are ineffective because of poor high temperature properties. Glassy-type polymers are ineffective because of room temperature brittleness. The polyolefinic materials are the ethylene polymers and copolymers and the propylene polymers and copolymers having a brittle temperature of less than about -1.1°C (as measured by ASTM D-746) and a Vicat softening point of greater than about 76.7°C (as measured by ASTM D-1875). Such materials include polypropylene, low density or high density polyethylene, ethylene/vinyl acetate copolymer, ethylene/acrylic acid copolymer, and ethylene/butene-1 and other alkene-1 copolymers.

The polyolefinic materials of the core are bonded to the aluminium skin layers by the use of an intermediate adhesive layer therebetween. The intermediate adhesive layer can have a thickness from 2.54 μm to 127 μm, preferably from 7.6 μm to 63.5 μm. Such layer may be formed from any thermoplastic polymeric resinous material which will tightly adhere the core layer to the aluminium skin layers. A particularly preferred adhesive layer is a normally solid thermoplastic ethylene-based polymer modified by monomers having reactive carboxylic acid groups, particularly a copolymer of a major proportion of ethylene and a minor proportion, typically from 1 to 30, preferably from 2 to 20, percent by weight, of an ethylenically unsaturated carboxylic acid. Specific examples of such suitable ethylenically unsaturated carboxylic acids (which term includes mono- and polybasic acids, acid anhydrides, and partial esters of polybasic acids) are acrylic acid, methacrylic acid, crotonic acid, fumaric acid, maleic acid, itaconic acid, maleic anhydride monomethyl maleate, monoethyl maleate, monomethyl fumarate, monoethyl fumarate, tripropylene glycol monomethyl ether acid maleate, or ethylene glycol monophenyl ether acid maleate. The carboxylic acid monomer is preferably selected from a,bethylenically unsaturated mono- and polycarboxylic acids and acid anhydrides having from 3 to 8 carbon atoms per molecule and partial esters of such polycarboxylic acid wherein the acid moiety has at least one carboxylic acid group and the alcohol moiety has from 1 to 20 carbon atoms. The copolymer can also contain other copolymerizable monomers including an ester of acrylic acid. The comonomers can be combined in the copolymer in any way, e.g., as random copolymers, as block or sequential copolymers, or as graft copolymers. Materials of these kinds and methods of making them are readily known in the art. Specific examples of such copolymers are ethylene acrylic acid copolymer, ethylene methacrylic acid copolymer, and ethylene maleic acid copolymer.

The adhesive layer can first be applied to the aluminium skin layers, first be applied to the core, or can

3

be applied to the aluminium skin layer and the core simultaneously. The adhesive layer can be applied using well known application techniques, such as, for example, solvent casting, roll coating, or, preferably, extrusion processes. When the adhesive layer is to be combined with the core prior to the lamination thereof to the aluminium skins, such layers can advantageously be introduced into the laminates by the well known coextrusion process or combining the conventional extrusion process with a film lamination technique.

In one embodiment of this invention, the core of polyolefin material may be irradiated with a high energy ionizing radiation source to achieve at least a partial crosslinking thereof for improved creep properties and thermal stability.

In another embodiment of this invention, the core is made electroconductive by incorporating conductive particulates, e.g., carbon black and metal particles, thereinto. The conductive core enhances the weldability of the resulting metal-polymer-metal laminates.

In yet another embodiment of this invention, the core of polyolefin material contains at least one reinforcing element embedded therein to enhance the mechanical properties of the resulting laminates. Such elements can be made from, for example, glass fibers, a perforated metallic sheet, an expanded metallic sheet, or a metallic wire screen.

Numerous solid fillers such as pigments, lubricants or antioxidants well known in the art, can also be incorporated into the core or adhesive layers, provided the resultant laminate retains the hereinbefore prescribed characteristics.

In one embodiment of this invention, an aluminium-polymer-aluminium laminate is produced by disposing a layer of a polyolefin material, which layer is continuously extruded from a conventional, screw-type extruder, between two aluminium skin layers which are fed continuously to a nip formed by a pair of opposing and counter-rotating laminating rolls. Heat and pressure sufficient to affect a bond between the aluminium skin layers and the polyolefin material are applied to the skin layers. This is accomplished by heating one or both of the laminating rolls, by preheating the aluminium skin layers, or through the heat of extrusion of the polyolefin material, or, by a combination of such heating steps. The distance between the laminating rolls at the nip can be controlled to exert effective pressure to aluminium-polymer-aluminium laminate to ensure an adequate bond between the aluminium skins and the polymer core. The laminating rolls can be covered with a layer of polytetrafluoroethylene to prevent sticking of the polymeric material to the rolls.

In another embodiment of this invention, the aluminium skin layers are first coated with an adhesive layer on one side thereof and are fed continuously to the combining nip with the coated sides facing toward each other. A layer of polyolefin material is disposed between the two adhesive coated skin layers by continuous extrusion as described hereinabove.

In yet another embodiment of this invention, a multi-layered extrudate comprising an adhesive layer - a core layer - an adhesive layer is disposed continuously and simultaneously between the two aluminium skin layers or precoated aluminium skin layers by the well known coextrusion process.

The present invention is not limited by the process used to prepare the aluminium-polymer-aluminium structural laminates. Extrusion processes, i.e., extrusion coating or extrusion lamination; film lamination techniques; solution coating techniques or combination of such techniques well known in the art can readily be used to produce the laminates of this invention. It is essential, however, that the thermoplastic polymeric resinous material of the adhesive and core layers be subjected to a temperature at least equal to the softening point thereof, for a period of time sufficient to cause the polymer to tightly adhere but not undergoing significant degradation thereof, and effective pressure to achieve intimate contact between the polymer layers and the aluminium skin layers.

With the laminates according to the invention an adhesive can be employed between the aluminium skin layers and the polymer core. The preferred adhesive layer is made from a copolymer of ethylene and an ethylenically unsaturated carboxylic acid previously described. Most preferably ethylene acrylic acid copolymer.

In a "no load oven test", used to determine the effect of heat on aluminium-polyolefin-aluminium laminates of the present invention, an aluminium-polyolefin-aluminium laminate is placed in a circulating-air oven maintained at a temperature of 87.8°C for a period of 30 minutes. Following the test, the laminate is examined for a change in appearance, dimension or other properties or a sign of delamination between individual layers.

The specific working examples that follow are intended to illustrate the invention but are not to be taken as limiting its scope.

Examples

The following general procedures were used to make laminates within the scope of the present invention, which laminates are described in Table I. In one such procedure, two webs of metal skin material were extrusion coated on one side thereof with about 2 mils (50.8 μm) of an adhesive copolymer. Two webs of the adhesive coated metal were fed into a combining nip with the adhesive coated side facing toward each other. The combining nip was formed between a pair of opposed counter-rotating laminating rolls preheated to a temperature of about 350° F (176.7° C). The laminating rolls were adjusted to allow the desired amount of pressure to be applied as the webs (about 27 inches wide) passed between the rolls. A molten polymeric resin core material was forced through a slot in a sheeting die of a conventional screw type extruder at a temperature of about 400° F (204.4° C) into the combining nip and disposed between the two adhesive coated metal webs. The slot of the die had a generally rectangular configuration about 30 inches (76.2 cm) wide with a gap of approximately 0.016 inch (0.041 cm). The laminating rolls had a diameter of 8 inches (20.32 cm) and were rotated at a speed of about 1.15 rpm.

A similar procedure described hereinabove, was used to make laminates of the present invention having no adhesive layers between the polymeric resin core and the metal skins. However, the initial extrusion coating step, whereby the adhesive copolymer was applied to the metal skin layers, was not employed.

In another procedure, sheets of polymeric resin core were prepared from resin granules using well known compression molding techniques. A sheet of core material was positioned between two sheets of adhesive copolymer.

The three-layer assembly comprising adhesive/core/adhesive was then positioned between two metal skin layers, and the resulting assembly was placed in a molding press and was treated at a temperature of 302° F (150° C) for a period of 10 minutes under a pressure of about 20 psi (138 kPa). The pressure in the mold was then increased to about 100 psi (690 kPa). At the same time, the mold was allowed to cool to ambient temperature under the same pressure while cooling water was circulated through the platens of the molding press.

When the adhesive layer was applied in the form of powder or solvent based suspension, such layer was first applied to one side of each metal skin. Two adhesive coated metal skins were placed on each side of the polymeric core with the coated sides facing toward the core. The three-layer assembly was then placed in the mold press and laminated under the conditions described hereinabove.

Certain properties of laminates of the present invention are reported in Table II.

## TABLE I

| Example Number | Laminate Construction | Laminate Thickness (mil) [μm] |
|---|---|---|
| 1 (C) | 9 mil TFS(1)/2 mil EAA(2)/12 mil HDPE(3)/2 mil EAA(2)/9 mil TFS(1) | 34 [864] |
| 2 (C) | 6 mil TFS(4)/2 mil EAA(2)/22 mil HDPE(3)/2 mil EAA(2)/6 mil TFS(4) | 38 [965] |
| 3 (M) | 9 mil TFS(1)/2 mil EAA(5)/7 mil HDPE(3)/2 mil EAA(3)/9 mil TFS(1) | 29 [737] |
| 4 (M) | 9 mil TFS(1)/2 mil EAA(5)/16 mil HDPE(3)/2 mil EAA(3)/9 mil TFS(1) | 38 [965] |
| 5 (M) | 9 mil TFS(1)/2 mil EAA(5)/30 mil HDPE(3)/2 mil EAA(3)/9 mil TFS(1) | 52 [1321] |
| 6 (M) | 9 mil TFS(1)/2 mil EAA(5)/41 mil HDPE(3)/2 mil EAA(3)/9 mil TFS(1) | 63 [1600] |
| 7 (M) | 9 mil TFS(1)/2 mil PAA(6)/11 mil PP(7)/2 mil PAA(6)/9 mil TFS(1) | 33 [838] |
| 8 (M) | 9 mil TFS(1)/2 mil PAA(8)/12 mil PP(7)/2 mil PAA(8)/9 mil TFS(1) | 34 [864] |
| 9 (M) | 9 mil TFS(1)/2 mil EAA(5)/13 mil 10% glass fiber & HDPE(3)/- 2 mil EAA(5)/9 mil TFS(1) | 35 [889] |
| 10 (M) | 9 mil TFS(1)/2 mil EAA(5)/10 mil 35% glass fiber & HDPE(3)/- 2 mil EAA(5)/9 mil TFS(1) | 32 [813] |
| 11 (C) | 9 mil TFS(1)/14 mil HDPE(9)/9 mil TFS(1) | 32 [813] |
| 12 (C) | 9 mil TFS(1)/2 mil EAA(2)/14 mil LDPE(10)/2 mil EAA(2)/9 mil TFS(1) | 36 [914] |
| 13 (C) | 6 mil TFS(4)/2 mil EAA(2)/33 mil LDPE(10)/2 mil EAA(2)/6 mil TFS(4) | 49 [1245] |

EP 0 019 835 B1

TABLE I (Continued)

Notes:

(C) - Sample prepared by continuous lamination.

(M) - Sample prepared using a molding press.

TFS(1) - Tin free steel, Type D, T-1 temper.

EAA(2) - Ethylene acrylic acid copolymer coating density:  0.930-0.935, 8% by weight acrylic acid, 5 M.I.

HDPE(3) - High density polyethylene, density:  0.956, 0.08 M.I.

TFS(4) - Tin free steel, Type MR, T-3 temper.

EAA(5) - Ethylene acrylic acid copolymer film, 8% by weight acrylic acid.

PAA(6) - Polypropylene acrylic acid graft copolymer powder.

PP(7) - Polypropylene.

PAA(8) - Polypropylene acrylic acid graft copolymer suspension.

HDPE(9) - High density polyethylene, density:  0.967, 0.3 M.I.

LDPE(10) - Low density polyethylene, density:  0.921, 0.7 M.I.

Al(11) - Aluminum.

## TABLE II

| Example Number | Laminate/Skin Flexural/Modulus Ratio(%) | Core(1)/Skin Thickness Ratio | Laminate/Skin Density Ratio(%) | Limiting. Dome Height Ratio(%) | Lap Shear(2) (psi) | [MPa] |
|---|---|---|---|---|---|---|
| 1 | 74 | 1.9 | 58 | 91 | 1700 | [11.7] |
| 2 | 62 | 4.2 | 40 | 76 | 1400 | [9.7] |
| 3 | 86 | 1.3 | 66 | ND | 1400 | [9.7] |
| 4 | 78 | 2.3 | 53 | ND | 1400 | [9.7] |
| 5 | 64 | 3.9 | 42 | ND | 1400 | [9.7] |
| 6 | 54 | 5.2 | 37 | ND | 1400 | [9.7] |
| 7 | 87 | 1.7 | 59 | ND | ND | |
| 8 | 82 | 1.9 | 57 | ND | ND | |
| 9 | 82 | 1.9 | 58 | ND | ND | |
| 10 | 89 | 1.6 | 64 | ND | ND | |
| 11 | 80 | 1.7 | 61 | 88 | 1900 | [13.1] |
| 12 | 45 | 2.1 | 55 | ND | 1200 | [8.3] |
| 13 | ND | 6.0 | 34 | 79 | 1200 | [8.3] |

EP 0 019 835 B1

TABLE II (Continued)

Notes:

(1) – Core includes adhesive layers, if any.

(2) – Values typical of this type of laminate.

ND – Not determined.

* – Calculated.

As shown in Table II, metal-plastic-metal laminates of the present invention are of light weight and can readily be formed as evidenced by relatively high values for the limiting dome height ratio. At the same time, the laminates have surprisingly high stiffness and lap shear values.

In addition, Examples 1-4 and 11-13 were tested and passed the 90° bend test. Other examples were not tested. Further, Example 13 was subjected to and passed the no load oven test.

**Claims**

1.  An aluminium-polyolefin-aluminium structural laminate comprising a core of polyolefin having tightly adhered to each side thereof an aluminium skin layer characterized in that the core is tightly adhered to the aluminium skin layers by the use of an intermediate adhesive layer therebetween, each aluminium skin layer being from 152 μm to 305 μm (6 - 12 mil) thick and a total thickness of from 762 to 1524 μm (30 - 60 mil); the core of polyolefin material being selected from homopolymers and copolymers of ethylene or propylene and having a brittle temperature of less than about -1. 1° C and a Vicat softening point of greater than about 76.7° C; the laminate having

    (1) a flexural stiffness at least 40 percent that of the solid metal of the skin layer of the lower modulus having the same thickness as said laminate as measured by ASTM D790 on a 2.54 cm wide sample having a 10.16 cm span under three point loading conditions,
    (2) a density from 25 percent to 90 percent that of the average of two solid aluminium skin layers,
    (3) as a measure of stretch formability a limiting dome height of at least about 60 percent of the limiting dome height of the solid aluminium of the skin layer of the lower ultimate elongation having the same thickness as the laminate,
    (4) the capability of being subjected to a no load oven test, subsequent to forming of said laminate, at a temperature of at least 87.8° C for a period of 30 minutes, without delaminating, and

(5) the capability of being bent at room temperature to 90°C to a critical radius without metal rupture, the critical radius defined as the distance from the pivot point to the inner skin surface of the laminate, being about equal to the total laminate thickness.

2. The structural laminate of Claim 1, wherein the core of olefinic material has been irradiated for improved creep properties and thermal stability.

3. The structural laminate of Claim 1 or 2, wherein the core of olefin is electroconductive.

4. The structural laminate of any one of the preceding claims, wherein the core of polyolefin material contains at least one reinforcing element embedded therein.

5. The structural laminate of Claim 4, wherein the reinforcing element is an expanded aluminium sheet.

6. The structural laminate of any one of the preceding claims, wherein the polyolefin material is high density polyethylene.

7. The structural laminate of any one of the preceding claims, wherein the intermediate adhesive comprises a copolymer of ethylene and ethylenically unsaturated carboxylic acid.

8. The structural laminate of Claim 7, wherein the carboxylic acid is acrylic acid.

**Revendications**

1. Stratifié à structure d'aluminium-polyoléfine-aluminium comprenant un noyau de polyoléfine présentant, fermement adhérée de chaque côté de celui-ci, une couche pelliculaire d'aluminium, caractérisé en ce que le noyau est fermement fixé aux couches pelliculaires d'aluminium à l'aide d'une couche adhésive intermédiaire entre eux, chaque couche pelliculaire d'aluminium ayant une épaisseur de 152 $\mu$m à 305 $\mu$m (6 à 12 mils) et une épaisseur totale de 762 $\mu$m à 1524 $\mu$m (40 à 60 mils), le noyau en matière polyoléfinique étant sélectionné parmi les homopolymères et copolymères d'éthylène ou propylène et ayant une température de fragilité inférieure à environ -1,1°C et un point Vicat de ramollissement supérieur à 76,7°C, le stratifié ayant

(1) une rigidité à la flexion d'au moins environ 40 pour cent de celle du métal solide de la couche pelliculaire du module inférieur ayant la même épaisseur que ledit stratifié, mesurée suivant ASTM D-790 sur un échantillon d'une largeur de 2,54 cm ayant une portée de 10,16 cm dans des conditions de chargement en trois points,

(2) une densité de 25 pour cent à 90 pour cent de celle de la moyenne des deux couches pelliculaires en métal solide,

(3) comme mesure de formabilité par étirage, une hauteur de voûte limite d'au moins environ 60 pour cent de la hauteur de voûte limite du métal solide de la couche pelliculaire du dernier allongement inférieur ayant la même épaisseur que le stratifié,

(4) la possibilité d'être soumis à un essai au four en marche à vide, suivant la formation dudit stratifié, à une température d'au moins 87,8°C pendant une durée de 30 minutes, sans délaminage, et

(5) la possibilité d'être plié, à température ambiante, à 90°C suivant un rayon critique, sans rupture du métal; le rayon critique, défini comme étant la distance entre le point pivot et la surface pelliculaire intérieure du stratifié, étant environ égal à l'épaisseur totale du stratifié.

2. Stratifié structuré suivant la revendication 1, dans lequel le noyau en matière oléfinique a été irradié en vue de propriétés de fluage et d'une stabilité thermique améliorées.

3. Stratifié structuré suivant la revendication 1 ou 2, dans lequel le noyau en oléfine est conducteur d'électricité.

4. Stratifié structuré suivant l'une des revendications précédentes, dans lequel le noyau en matière polyoléfinique contient au moins un élément de renforcement.

5. Stratifié structuré suivant la revendication 4, dans lequel l'élément de renforcement est une feuille d'aluminium expansé.

6.  Stratifié structuré suivant l'une au l'autre des revendications précédentes, dans lequel la matière polyoléfinique est du polyéthylène haute densité.

7.  Stratifié structuré suivant l'une au l'autre des revendications précédentes, dans lequel l'adhésif intermédiaire comprend un copolymère d'éthylène et d'acide carboxylique éthyléniquement nonsaturé.

8.  Stratifié structuré suivant la revendication 7, dans lequel l'acide carboxylique est de l'acide acrylique.

**Patentansprüche**

1.  Aluminium-Polyolefin-Aluminium-Laminatstruktur mit einem Kern aus Polyolefin, an dessen beiden Seiten eine Aluminiumhautschicht fest haftet, **dadurch gekennzeichnet,** daß der Kern fest an den Aluminiumhautschichten durch Verwendung einer dazwischen befindlichen mit Klebstoff beschichteten Zwischenlage haftet, wobei jede Aluminiumhautschicht von 152 $\mu$m bis 305 $\mu$m (6 - 12 mil) dick ist und eine Gesamtdicke von 762 bis 1524 $\mu$m (30 - 60 mil) hat, wobei der Kern aus Polyolefinmaterial aus Homopolymeren und Copolymeren von Ethylen oder Propylen ausgewählt ist und eine Versprödungstemperatur von weniger als etwa -1,1°C und einen Vicat-Erweichungspunkt von mehr als etwa 76.7°C hat; wobei das Laminat
    (1) eine Biegesteifigkeit von mindestens 40 Prozent bezogen auf die des massiven Metalls der Hautschicht mit dem geringeren Modul aufweist, welches dieselbe Dicke wie das Laminat hat, wie durch ASTM D790 an einer 2,54 cm breiten Probe mit einer Spanne von 10,16 cm unter Dreipunkt-Belastungsbedingungen bestimmt wird,
    (2) eine Dichte von 25 Prozent bis 90 Prozent bezogen auf die des Mittelwerts von zwei massiven Aluminiumhautschichten hat,
    (3) als Maß der Streckformbarkeit eine Wölbungshöhenbegrenzung von mindestens etwa 60 Prozent der Wölbungshöhenbegrenzung des massiven Aluminiums der Hautschicht mit der geringeren Endausdehnung aufweist, welches dieselbe Dicke wie das Laminat hat,
    (4) die Fähigkeit aufweist, nach der Herstellung des Laminats einem unbelasteten Ofentest bei einer Temperatur von mindestens 87,8°C für eine Dauer von 30 Minuten ohne Entlaminierung unterworfen zu werden, und
    (5) die Fähigkeit aufweist, bei Raumtemperatur auf 90° zu einem kritischen Radius ohne Bruch des Metalls gebogen zu werden, wobei der kritische Radius als die Entfernung vom Biegepunkt zur inneren Hautoberfläche des Laminats definiert ist, die etwa gleich wie die Gesamtdicke des Laminats ist.

2.  Laminatstruktur nach Anspruch 1, worin der Kern aus olefinischem Material für verbesserte Kriecheigenschaften und thermische Stabilität bestrahlt worden ist.

3.  Laminatstruktur nach Anspruch 1 oder 2, worin der Kern aus Olefin elektrisch leitfähig ist.

4.  Laminatstruktur nach einem der vorhergehenden Ansprüche, worin der Kern aus Polyolefinmaterial mindestens ein darin eingebettetes Verstärkungselement enthält.

5.  Laminatstruktur nach Anspruch 4, worin das Verstärkungselement ein ausgeweitetes Aluminiumblech ist.

6.  Laminatstruktur nach einem der vorhergehenden Ansprüche, worin das Polyolefinmaterial ein Polyethylen mit hoher Dichte ist.

7.  Laminatstruktur nach einem der vorhergehenden Ansprüche, worin der Zwischenklebstoff ein Copolymer aus Ethylen und ethylenisch ungesättigter Carbonsäure enthält.

8.  Laminatstruktur nach Anspruch 7, worin die Carbonsäure Acrylsäure ist.